Europäisches Patentamt

**European Patent Office**

**Office européen des brevets**

(19)

(11) Numéro de publication: **0 283 344 B1**

(12) **FASCICULE DE BREVET EUROPEEN**

(45) Date de publication du fascicule du brevet:
**12.09.90**

(51) Int. Cl.⁵: **E21B 43/25, E21B 43/32**

(21) Numéro de dépôt: **88400376.5**

(22) Date de dépôt: **19.02.88**

(54) Procédé pour la réduction sélective des venues d'eau dans les puits producteurs d'huile ou de gaz.

(30) Priorité: **06.03.87 FR 8703224**

(43) Date de publication de la demande:
**21.09.88 Bulletin 88/38**

(45) Mention de la délivrance du brevet:
**12.09.90 Bulletin 90/37**

(84) Etats contractants désignés:
**DE GB IT NL**

(56) Documents cités:
**FR-A- 2 376 287**
**GB-A- 2 132 664**

(73) Titulaire: **INSTITUT FRANCAIS DU PETROLE, 4, Avenue de Bois-Préau, F-92502 Rueil-Malmaison(FR)**

(72) Inventeur: **Zaitoun, Alain, 20, Place Martin Luther King, F-76000 Rouen(FR)**
Inventeur: **Kohler, Norbert, 14, rue des Chenêts, F-78100 Saint Germain en Laye(FR)**

ACTORUM AG

**Description**

La présente invention est relative à un procédé pour la réduction sélective des venues d'eau d'une formation productrice d'huile ou de gaz vers un puits producteur sans affecter la production d'huile ou de gaz. Ce procédé est basé sur l'injection dans la formation, à partir de ce puits producteur, d'une dispersion ou solution aqueuse d'un polyacrylamide non hydrolysé ou d'un copolymère d'acrylamide non hydrolysé, suivie d'un composé basique de métal alcalin, par exemple hydroxyde, carbonate, phosphate, alcoolate ou silicate, permettant l'hydrolyse in situ dudit polyacrylamide ou copolymère.

L'eau sous forme de saumure existe souvent dans la même formation que l'huile ou le gaz. La mise en production des réservoirs contenant de l'huile ou du gaz entraîne simultanément l'apparition, aux puits producteurs, d'eau en quantité telle qu'il peut se poser très rapidement des problèmes importants: formation de dépôts au voisinage du puits ou dans le tubing, accroissement de la corrosion des pièces métalliques de fond ou de surface, augmentation des quantités de fluides pompées, transférées et stockées, création avec l'huile d'émulsions parfois difficiles à rompre en surface, annulation de la production des puits qui ne peuvent produire que par éruption naturelle.

De nombreuses méthodes destinées à réduire les venues d'eau dans les puits de production ont été proposées et testées sur champ; elles consistent en général à mettre en place dans la formation, à l'interface entre l'eau et l'huile ou le gaz, une barrière imperméable constituée par exemple de ciments, de résines, de suspensions de particules solides. Ces agents colmatants ont le désavantage de bloquer presque autant l'huile ou le gaz que l'eau, en particulier lorsque la venue d'eau est occasionnée par un phénomène de formation de cône d'eau dit de coning.

Plus récemment on a proposé l'emploi de polymères hydrosolubles et en particulier de polyacrylamides hydrolysés et de divers polysaccharides, éventuellement réticulés par des sels d'ions multivalents, par exemple trivalents, tels que les ions chrome et aluminium. Il a été constaté tout d'abord que si cette réticulation sous forme de gels plus ou moins compacts entraîne bien l'arrêt ou la réduction de la venue d'eau, elle présente néanmoins l'inconvénient d'affecter également dans une grande mesure la production d'huile ou de gaz.

Parmi les polymères hydrosolubles, les polyacrylamides et en particulier les polyacrylamides hydrolysés sont utilisés couramment pour la prévention des venues d'eau dans les puits producteurs. Leur mécanisme d'action est compris de la manière suivante : le polymère, injecté dans le milieu poreux sous forme de solution aqueuse, s'adsorbe à la surface du solide et réduit le diamètre des pores du milieu poreux par gonflement au contact de l'eau ; de ce fait les polymères sont capables de freiner la circulation de l'eau. Par contre, les fluides non aqueux tels que l'huile ou le gaz ne gonflent pas les macromolécules adsorbées qui, de ce fait, laissent la voie libre à l'écoulement de ces fluides.

Le brevet US 3,308,885 est basé sur l'utilisation de solutions de polyacrylamide hydrolysé dans l'eau de production. La méthode n'est pas tout à fait satisfaisante en particulier lorsque la perméabilité à l'eau de la formation est élevée. Dans ce cas en effet il est nécessaire d'utiliser des concentrations élevées en polymère, ce qui entraîne des difficultés d'injection des solutions extrêmement visqueuses obtenues. D'autre part, la teneur en argile, donc en sites adsorbants, étant relativement réduite dans ce type de milieu poreux, l'adsorption du polymère est rendue plus difficile.

Le brevet US 4,095,651 remédie à un certain nombre de ces défauts en préconisant la dispersion du polyacrylamide hydrolysé dans une eau de salinité plus élevée que l'eau produite. L'augmentation de la force ionique de l'eau de dissolution du polymère a pour effet de réduire d'une part la viscosité des solutions injectées, donc de réduire les difficultés de pompage, et d'autre part d'assurer une adsorption supérieure du polyacrylamide hydrolysé sur la paroi des milieux poreux. Toutefois, le fait d'utiliser une eau d'injection plus salée que l'eau de production nécessite l'addition de grandes quantités de sels et provoque bien souvent des problèmes d'incompatibilité fluide-fluide et fluide-roche.

L'objectif de la présente invention est de réduire la production d'eau dans les puits producteurs sans diminuer la production d'huile ou de gaz.

Le procédé de l'invention est différent d'un procédé de récupération assistée du pétrole dans lequel une solution de polymère, en général à une concentration de l'ordre de quelques centaines de parts par million, est injectée ultérieurement ou concomittamment à une solution d'un composé basique de métal alcalin à une pression suffisante pour pousser la solution dans la formation et déplacer ainsi une partie de l'huile de cette formation, laquelle partie est récupérée dans des puits dits de production et différents des puits d'injection. Il est en effet bien connu que les solutions aqueuses de composés basiques de métal alcalin contenant du polymère ou poussées par une dispersion visqueuse de polymère permettent d'assurer ainsi un meilleur contrôle de mobilité que l'eau ou la solution basique seule pour pousser l'huile vers le puits de production.

FR A 2 576 287 concerne uniquement le blocage des venues d'eau, et pour cela, on forme un gel par réticulation d'un polyacrylamide non-hydrolysé au moyen d'un dialdéhyde. Il n'y a pas présence d'huile, on a constaté que les gels décrits dans ce brevet français présentent la particularité d'être peu sélectifs et de bloquer à la fois la production d'eau et d'huile.

Dans la présente invention, on hydrolyse partiellement un polyacrylamide non-hydrolysé préalablement mis en place dans une formation. Le blocage est alors sélectif, c'est à dire que l'eau est fortement freinée, tandis que le passage de l'huile n'est que faiblement affecté.

Plus précisément, l'invention concerne un procédé pour réduire ou supprimer les venues d'eau d'une formation ou d'une partie de formation contenant de l'huile ou du gaz vers au moins une partie d'un puits traversant la dite formation et comprend les étapes suivantes:

a) on injecte dans la formation, à partir du puits, une solution (ou dispersion) aqueuse d'un polyacrylamide non-hydrolysé ou d'un copolymère non ionique d'acrylamide non hydrolysé, ce qui provoque l'adsorption sur la roche constitutive de la formation,

b) on injecte ultérieurement un composé basique de métal alcalin qui, au contact du polymère ou copolymère, adsorbé sur la roche, réalise son hydrolyse in situ,

c) on remet le puits en production d'huile et/ou de gaz ce qui permet aux fluides de la formation de traverser la partie de la formation qui contient le polymère adsorbé; la circulation de l'huile et/ou du gaz à travers cette partie de la formation et donc la production en hydrocarbures du puits ne sont pas sérieusement modifiées par rapport à ce qu'elles étaient avant traitement, tandis que la production d'eau est réduite.

L'utilisation dans ce procédé de polyacrylamide non hydrolysé ou d'un copolymère non ionique de l'acrylamide non hydrolysé et l'hydrolyse postérieure in situ du polymère ou copolymère présentent les avantages suivants par rapport à l'injection de polyacrylamide déjà hydrolysé:

Du fait de leur caractère essentiellement non-ionique (moins de 10 %, de préférence moins de 5% molaire de motifs ioniques), le polyacrylamide non hydrolysé ou ses copolymères sont compatibles avec toutes sortes d'eaux, indifféremment de leur composition minéralogique, particulièrement en ions monovalents ou divalents, et développent une viscosité pratiquement indépendante de la teneur en sels. La viscosité des solutions aqueuses de polyacrylamide hydrolysé chute par contre fortement avec l'augmentation de la force ionique de l'eau de dissolution et des risques de précipitation, en particulier par les ions divalents, existent à partir d'une certaine teneur en groupes chargés, fonction de la concentration en solution du polymère, de la force ionique et de la composition de l'eau comme cela est montré dans la communication de A. Zaitoun et B. Potié à la société des ingénieurs pétroliers sous le numéro SPE 11785 de Juin 1983.

Par ailleurs, toujours par suite de son caractère non ionique, le polyacrylamide non hydrolysé a davantage tendance à s'adsorber à la surface le plus souvent chargée négativement des minéraux de la formation alors que le polyacrylamide hydrolysé, chargé lui-même négativement en fonction de la teneur en groupes carboxyliques de sa molécule, est lui plus ou moins repoussé par ces mêmes minéraux. Le procédé est naturellement d'autant plus performant que la surface spécifique des minéraux constitutifs de la roche réservoir est importante, à savoir relativement basse sur les grès et sables peu argileux, mais relativement élevée si la teneur en argile augmente ou si la roche est carbonatée.

L'hydrolyse ultérieure du polyacrylamide non hydrolysé adsorbé sur la paroi des milieux poreux permet à son tour de fabriquer localement en plus grande quantité du polyacrylamide hydrolysé qui, développant une plus grande viscosité particulièrement en eau douce, a tendance à freiner davantage le passage de l'eau que le polyacrylamide n'ayant pas subi cette hydrolyse. Les mêmes constatations sont faites avec les copolymères précités.

Les avantages d'utilisation du présent procédé apparaissent alors très nettement: compatibilité du polymère avec l'eau de production qui peut ainsi être réinjectée, viscosité réduite à l'injection, adsorption élevée sur la roche réservoir, gonflement sélectif en présence d'eau par suite de l'hydrolyse du polymère adsorbé.

Le polymère préféré de l'invention est un polyacrylamide de haut poids moléculaire ou un cogolymère non-ionique d'acrylamide non hydrolysé, de préférence en proportion inférieure à 50%, avec un ou plusieurs comonomères également non-ioniques, de préférence en proportion supérieure à 50%, tels que par exemple la N-vinylpyrrolidone ainsi que divers ethers ou esters vinyliques comme par exemple le méthacrylate de butyle, les acrylates de méthyle et de glycidyle, l'acétate de vinyle etc... Par "non-ionique" on exclut la présence en proportion substantielle de restes d'acide polyacrylique ou de ses sels. La concentration en polymère dans la solution aqueuse est de préférence la plus élevée possible pour autant qu'elle est compatible avec la concentration en sel dans le milieu. Elle est habituellement comprise entre 0,02 et 3 ‰ poids (200 et 30000 ppm (parties par million) en poids) et de préférence entre 0,05 et 0,5% poids (500 et 5000 ppm en poids). Le poids moléculaire du polymère est avantageusement élevé, par exemple au moins de 500000, et de préférence au-dessus de $2.10^6$,

La nature de l'agent basique n'est pas critique, mais on utilisera de préférence un composé basique de métal alcalin, par exemple les hydroxydes, carbonates, phosphates, alcoolates ou silicates d'ammonium, de sodium ou de potassium. Les composés basiques de potassium seront utilisés préférentiellement du fait de leurs propriétés stabilisatrices des argiles de la formation. La concentration en composé basique de métal alcalin peut varier, par exemple entre les limites 0,001 et 1 mole/litre, et de préférence entre 0,05 et 0,5 mole/litre. Les plus fortes concentrations seront utilisées de préférence à basse température et les plus faibles concentrations de préférence à température élevée.

L'hydrolyse du polymère, sous l'effet de l'agent basique, est plus ou moins rapide. Elle est d'autant plus rapide que la température est plus élevée et que la quantité d'agent alcalin est plus importante. Si nécessaire, un essai préalable simple, réalisé au laboratoire permet de déterminer approximativement cette durée et la quantité d'agent basique nécessaire. Des températures de 30 à 100°C, par exemple 50 à 100° C, permettent, par exemple, une hydrolyse raisonnablement rapide.

Les exemples qui vont suivre illustrent les avantages d'utilisation du procédé de l'invention par rapport aux procédés conventionnels mettant en oeuvre du polyacrylamide hydrolysé.

<u>EXEMPLES 1 A 3.</u>

Une série d'essais a été opérée sur trois milieux poreux différents dans le but d'étudier l'influence de la perméabilité et de la nature de la roche réservoir sur l'efficacité du procédé de l'invention. Une solution aqueuse est tout d'abord préparée à l'aide d'un polyacrylamide non hydrolysé, AD 10 de la Société Rhône-Poulenc, de poids moléculaire voisin de $10.10^6$, dissout à la concentration de 2500 mg/litre (2500 ppm) dans une eau de salinité 2 g/l KCl. La viscosité relative à gradient nul, $\eta_{ro}$, a été trouvée égale à 30.

Trois milieux poreux différents, dont la perméabilité à l'eau a été préalablement déterminée, ont été utilisés (Tableau I). La solution de polymère préparée ci-dessus est injectée à faible vitesse dans chacun des milieux poreux initialement saturés en eau 2 g/l KCl jusqu'à saturation complète des milieux poreux en polymère. L'excès de polymère est ensuite balayé par de l'eau contenant 2 g/l de KCl jusqu'à ce que l'on ne détecte plus de polymère dans les effluents des divers milieux poreux. On en déduit une valeur de perméabilité plus faible à l'eau pour chacun des milieux poreux et l'on peut en calculer une réduction de perméabilité à l'eau occasionnée par la présence de polymère qui est par définition le rapport de la perméabilité initiale à la perméabilité finale après passage du polymère. L'épaisseur de la couche de polymère adsorbé sur le milieux poreux ( δ ) peut être calculée à partir des valeurs de réduction de perméabilité à l'aide de la relation :

$$R_k = \cfrac{1}{(1 - \cfrac{\delta}{r_p})^4}$$

où $\quad r_p$ = rayon de pore moyen = environ $\sqrt{\dfrac{8\ k}{\varnothing}}$

$\varnothing \quad$ = est la porosité.

$R_k \quad$ = réduction de perméabilité

On procède ensuite à l'injection dans les différents milieux poreux d'une solution aqueuse 0,1 N en KOH jusqu'à saturation du milieu poreux et on place les milieux poreux 3 heures dans une étuve thermostatée à 80°C afin d'hydrolyser le polymère. On procède ensuite comme précédemment à l'injection d'eau contenant 2 g/l de KCl jusqu'à ce que les effluents soient sensiblement à pH neutre. On en déduit une perméabilité à l'eau après hydrolyse du polymère adsorbé et des épaisseurs calculées de couche adsorbée. On constate pour tous les essais, d'une part des réductions de perméabilité plus importantes avec le polymère hydrolysé qu'avec le polymère non ionique non-hydrolysé, croissant avec la teneur en argile des milieux poreux, et d'autre part des épaisseurs calculées de couche adsorbée sensiblement doublées après hydrolyse du polymère.

4

## TABLEAU I

| Exemple N° | Milieu poreux | Argiles en % | Perméabilité en $\mu m^2$ | Polyacrylamide non hydrolysé | | Polyacrylamide après hydrolyse | |
|---|---|---|---|---|---|---|---|
| | | | | $R_k$ | $\delta$ en $\mu m$ | $R_k$ | $\delta$ en $\mu m$ |
| 1 | Grès argileux | 3 | 1,750 | 1,7 | 1,4 | 2,6 | 2,3 |
| 2 | Sable argileux | 5 | 4,6 | 2,6 | 2,1 | 9,7 | 4,3 |
| 3 | Sable argileux | 15 | 0,450 | 9 | 1,4 | 940 | 2,7 |

### EXEMPLE 4.

Cet exemple est destiné à illustrer l'art antérieur sur la base d'un essai de simulation de la réduction de perméabilité à l'eau dans un massif de grès argileux par suite de l'injection d'un polyacrylamide commercial déjà hydrolysé.

Un polyacrylamide hydrolysé (Poids moléculaire $\simeq 7.5\ 10^6$) contenant environ 30% de fonctions acrylates, Pusher 700 de Dow Chemical, est mis en solution à la concentration de 2500 mg/l dans l'eau contenant 2 g/l de KCl ($\eta_{ro} = 360$) et injecté dans un grès argileux de mêmes caractéristiques et dans les mêmes conditions que dans l'exemple 1. Après injection du polymère dans le milieu poreux, le polymère non adsorbé est déplacé à l'aide d'eau contenant 2 g/l de KCl, comme à l'exemple 1, et la réduction de perméabilité mesurée est de 1,8 à comparer avec la valeur 2,6 précédemment obtenue. On constate que sur ce milieu poreux à faible teneur en argile ce procédé de la technique antérieure donne un effet moins prononcé que le procédé de l'invention. Il va de soi que cette différence entre les valeurs de réduction de perméabilité augmenterait encore pour des milieux contenant davantage d'argile.

### EXEMPLE 5.

Cet exemple est destiné à montrer l'influence de la présence d'huile résiduelle sur les valeurs de réduction de perméabilité à l'eau après mise en oeuvre du procédé de l'invention et l'effet du traitement sur la circulation de l'huile.

Le même grès argileux qu'à l'exemple 1 est saturé par de l'eau 2 g/l KCl puis cette eau est déplacée par une huile raffinée de viscosité voisine de 2 centipoises. La perméabilité à l'huile à une saturation Sw = 50

% est alors $k_0 = 1$ µm². L'huile du milieu poreux est ensuite déplacée par de l'eau 2 g/l KCl jusqu'à une saturation résiduelle en huile $S_{or} = 37\%$. La perméabilité à l'eau en présence d'huile résiduelle est trouvée égale à 0,095 µm².

On procède ensuite comme dans l'exemple 1 en injectant successivement dans le milieu poreux à faible débit tout d'abord du polyacrylamide non hydrolysé, AD 10, de Rhône-Poulenc à la concentration de 2500 mg/l dans de l'eau à 2 g/l de KCl, puis de l'eau contenant 2 g/l de KCl jusqu'à déplacement complet du polymère non adsorbé. La réduction de perméabilité à l'eau en présence d'huile résiduelle est trouvée égale à 5,5. Cette valeur est à comparer avec la réduction de perméabilité de 1,7 précédemment obtenue dans l'exemple 1 en absence d'huile résiduelle.

On procède ensuite à l'hydrolyse in situ du polyacrylamide adsorbé en saturant le milieu poreux avec du KOH 0,1 N. Comme dans l'exemple 1 le milieu poreux est placé dans une enceinte thermostatée à 80°C pendant 3 heures et on déplace ensuite l'excès de base par de l'eau 2 g/l KCl. On mesure une réduction de perméabilité à l'eau après hydrolyse du polymère qui est trouvée égale à 16, valeur à comparer avec les 2,6 obtenus dans l'exemple 1.

On injecte finalement dans le milieu poreux la même huile que ci-dessus et on détermine ainsi une perméabilité à l'huile qui est trouvée identique à la perméabilité initiale en l'absence de polymère ($k_0 = 1$ µm² à une saturation Sw = 50 %). La réduction de perméabilité est donc égale à 1 et la mise en oeuvre du procédé n'altère pas la circulation d'huile.

Des expériences identiques aux exemples 2 et 3 mais en présence d'huile résiduelle confirment les résultats ci-dessus à savoir perméabilité à l'huile non modifiée mais réductions de perméabilité plus importantes à l'eau en présence d'huile résiduelle après mise en place du polyacrylamide non hydrolysé suivi de son hydrolyse in situ.

EXEMPLE 6.

Une expérience analogue à l'exemple 5 a été réalisée pour préparer une application sur champ en vue de réduire les venues d'eau d'un puits de stockage de gaz.

La perméabilité à l'eau et au gaz d'un grès argileux provenant du réservoir à traiter a été trouvée égale à 0,420 µm². Après mise en place du polyacrylamide hydrolysé AD 10 de Rhône-Poulenc, 2500 mg/litre dans l'eau de production (salinité totale environ 1 g/l) et déplacement par cette même eau, la réduction de perméabilité à l'eau a été trouvée égale à 2,8. Le polymère a été hydrolysé in situ par KOH 0,5 N pendant 24 heures à 35°C, puis l'excès de base déplacée par l'eau du réservoir. La réduction de perméabilité, à l'eau après hydrolyse du polymère a été trouvée égale à 7,3.

Au cours de cette expérience il a été possible de démontrer que le débit de production de gaz (81 litres/heure) n'est pas altéré par la mise en place du polymère et son hydrolyse in situ.

**Revendications**

1. Procédé pour la réduction sélective des venues d'eau d'une formation productrice d'huile ou de gaz vers un puits producteur, caractérisé en ce que, successivement:

a) on injecte dans au moins une partie de la formation, à partir du puits, une dispersion ou solution aqueuse d'un polyacrylamide non hydrolysé ou d'un copolymère non ionique d'acrylamide non hydrolysé avec au moins un autre comonomère,

b) on injecte dans la partie de formation précitée un composé basique de métal alcalin dont la concentration varie entre 0,001 et 1 mole par litre et l'on effectue une hydrolyse au moins partielle du polyacrylamide ou du copolymère entre 30 et 100°C et,

c) on remet le puits en condition de production d'huile ou de gaz et on recueille l'huile ou le gaz produit.

2. Procédé selon la revendication 1, dans lequel le copolymère est un copolymère d'acrylamide non hydrolysé avec la N-vinylpyrrolidone ou avec un ester ou éther vinylique.

3. Procédé selon la revendication 1 ou 2, dans lequel la concentration en polyacrylamide ou en copolymère de la dispersion ou solution aqueuse est de 0,02 à 3% poids (200 à 30 000 ppm en poids).

4. Procédé selon l'une des revendications 1 à 3, dans lequel le poids moléculaire du polyacrylamide ou du copolymère est d'au moins 500 000.

5. Procédé selon l'une des revendications 1 à 4, dans lequel le composé basique est un hydroxyde, carbonate, phosphate, alcoolate ou silicate de sodium ou de potassium.

6. Procédé selon l'une des revendications 1 à 5 dans lequel la concentration de la solution d'hydroxyde de métal alcalin est de 0,05 à 0,5 mole/litre.

**Claims**

1. A process for the selective reduction of water inflows form an oil or gas producing formation towards a producing well, characterized by the successive steps of:

a) injecting from the well, into at least a part of the formation, an aqueous dispersion or solution of a non-hy drolyzed polyacrylamide or of a non-ionic copolymer of non-hydrolyzed acrylamide with at least one other comonomer,

b) injecting into said part of formation an alkal metal basic compound whose concentration is between 0.001 and 1 mole/liter and carrying out at least a partial hydrolysis of the polyacrylamide or of the copolymer between 30 and 100°C and,

c) bringing again the well in condition of oil or gas production and recovering the produced oil or gas.

2. A process according to claim 1, wherein the copolymer is a non-hydrolyzed copolymer of acrylamide with n-vinylpyrrolidone or with a vinyl ester or ether.

3. A process according to claim 1 or 2, wherein the polyacrylamide or the copolymer concentration of the aqueous dispersion or solution is from 2,02 to 3% (200 to 30 000 ppm) by weight.

4. A process according to one of claims 1 to 3, wherein the polyacrylamide or the copolymer molecular weight is at least 500 000.

5. A process according to one of claims 1 to 4, wherein the basic compound is an hydroxide, carbonate, phosphate, alcoholate or silicate of sodium or potassium.

6. A process according to one of claims 1 to 5, wherein the concentration of alkali metal hydroxide solution is from 0.05 to 0.5 mole/liter.

**Patentansprüche**

1. Verfahren zur selektiven Reduktion des Eindringens von Wasser einer Öl oder Gas produzierenden Formation in eine Quelle oder einen Schacht dieser Produkte, dadurch gekennzeichnet, daß man nacheinander:

a) in mindestens einen Teil der von der Quelle ausgehenden Formation eine wässrige Dispersion oder Lösung eines nicht-hydrolisierten Polyacrylamids oder eines nichtionogenen Copolymeren von nichthydrolisiertem Acrylamid mit mindestens einem anderen Comonomer injiziert,

b) in den genannten Teil der Formation eine basische Alkalimetallverbindung, deren Konzentration zwischen 0,001 und 1 Mol pro Liter beträgt, injiziert und eine mindestens partielle Hydrolyse des Polyacrylamids oder des Copolymeren zwischen 30 und 100°C bewirkt, und

c) die Quelle erneut in einen Zustand der Produktion von Öl oder Gas bringt und das Öl- oder Gasprodukt sammelt.

2. Verfahren nach Anspruch 1, bei dem das Copolymer ein Copolymer von nicht-hydrolysiertem Acrylamid mit N-Vinylpyrrolidon oder mit einem Vinylester oder -ether ist.

3. Verfahren nach Anspruch 1 oder 2, bei dem die Konzentration an Polyacrylamid oder an Copolymer der wässrigen Dispersion oder Lösung 0,02 bis 3 Gew.-% (200 bis 30 000 ppm, bezogen auf das Gewicht) beträgt.

4. Verfahren nach einem der Ansprüche 1 bis 3, bei dem das Molekulargewicht des Polyacrylamids oder des Copolymeren mindestens 500 000 beträgt.

5. Verfahren nach einem der Ansprüche 1 bis 4, bei dem die basische Verbindung ein Natrium- oder Kalium-hydroxid, -carbonat, -phosphat, -alkoholat oder -silikat ist.

6. Verfahren nach einem der Ansprüche 1 bis 5, bei dem die Konzentration der Alkalimetallhydroxidlösung 0,05 bis 0,5 mol/l beträgt.